# EUROPEAN PATENT APPLICATION

(11) **EP 3 450 486 A1**
(43) Date of publication of application: **06.03.2019**
(21) Application number: 17790004.0
(22) Date of filing: 28.03.2017
(51) Int. Cl.: C08J 5/24, C08J 5/06, B29D 29/00, B32B 27/02, D01F 8/18

(54) **COMPOSITE REINFORCING THREAD, PREPREG, TAPE FOR 3D PRINTING AND INSTALLATION FOR PREPARING SAME**

(30) Priority: 26.04.2016 RU 2016116328
(71) Applicant: Limited Liability Company "Anisoprint", Moscow 115280 (RU)
(72) Inventor: AZAROV, Andrey Valerievich, Moscow 115280 (RU); VASILIEV, Valery Vitalievich, Moscow 117545 (RU); RAZIN, Alexandr Fedorovich, Khotkovo Moskovskaya obl. 141370 (RU); SALOV, Vladimir Alekseevich, Moscow 125481 (RU)
(74) Representative: Chimini, Francesco
(86) International application number: PCT/RU2017/050018
(87) International publication number: WO 2017/188861

(57) **Abstract**

The invention relates to the field of composite materials and can be used for the manufacture of parts and structures made of composite materials, such as brackets, fittings, basic parts, wearable products, mesh and honeycomb structures for use in aviation, rocket and space technology, medicine, automotive industry, etc. The reinforcing composite filament which contains a roving of reinforcing fibers impregnated with a thermosetting binder and has a cross section in the shape of a circle 0.1-0.7 mm in diameter or an ellipse with ellipticity from 1 to 2 and the largest diameter of 0.1-0.7 mm; and the impregnated roving is subjected to heat or other treatment right up to a complete curing of the thermosetting binder. With the help of the claimed composite filament, a prepreg can be made by adding a thermoplastic binder. And also the tape can be produced by connecting the claimed filament or prepreg with the use of cross-links made of thermoplastic material. The filament is produced in the machine containing a bobbin holder, which is fitted with at least one bobbin with a roving of reinforcing fibers or reinforcing and functional fibers, an impregnator that impregnates the roving with a thermosetting binder, two heat treatment chambers for a complete curing of the thermosetting binder (the temperature is 70-130°C in the first chamber, and 160-400°C in the second chamber), a finished filament receiver fitted with at least one receiving bobbin driven by a drive that ensures the pulling of the roving through all the elements of the machine. To manufacture a prepreg, the machine is fitted with an applicator to apply a thermoplastic coating on a completely cured roving impregnated with a thermosetting binder. The invention makes it possible to reduce the complexity of the manufacture of parts with a thermoplastic matrix, which leads to a significant reduction in the cost of manufacturing parts with a thermoplastic matrix (many times lower); to reduce the time of manufacture of a product due to the lack of need for long-term polymerization of a binder; to increase the shelf life of starting materials (prepreg) and to improve the efficiency of manufacture of products from composite materials. The invention is especially useful for implementation in additive processes of the manufacture of parts from composite materials, such as 3D-printing. [Fig. 1]

## Description

### FIELD OF THE INVENTION

The invention relates to the field of composite materials and can be used for the manufacturing of parts and structures made of composite materials, such as brackets, fittings, basic parts, wearable products, lattice and honeycomb structures for use in aviation, rocket and space technology, medicine, automotive industry, etc.

### BACKGROUND OF THE INVENTION

At present, composite materials made of prepregs in the form of a tow, tape or binder-impregnated fabric made of reinforcing fibers are widely used in the art. To make a part, the prepreg is cut and laid on the technological tool, forming the product.

As a binder, thermosetting binders, for example, epoxy ones, are most commonly used. In this case, the prepreg manufacturing process is in impregnating the reinforcing material with a thermosetting binder followed by drying, during which a partial curing of the binder occurs.

Various prepregs containing a thermosetting binder and methods of manufacture of such prepregs are known, (e.g. [1] RF Patent No. 2321606, IPC C08J5/24, B32B27 / 04, Published 10.04.2008; [2] US Application No. 20120251823A1, IPC B29C41 / 30, Published 04.10.2012), including the delivery of a carbon yarn from the bobbin holder to the distributing comb and then to the first bath for the first impregnation with a 5% concentration solution of epoxy binder. The impregnated reinforcing material enters the apparatus for drying with infrared radiation to remove the solvent of the alcohol-acetone mixture. Then the dried yarn is fed to the rotary spreader and then to the second impregnation in the second bath with a 49% concentration solution of the same epoxy binder. Further, the impregnated reinforcing material is placed on an anti-adhesive substrate and delivered to the horizontal drying chamber. In this case, the drying temperature of the impregnated reinforcing material is reduced in relation to the gelatinization temperature of the binder.

The main disadvantages of prepregs based on thermosetting binder include their limited shelf life and the special requirements for storage conditions. Such prepregs are usually stored in freezers at temperatures below minus 18°C.

Besides, such prepregs have common disadvantages of composite materials manufactured using thermosetting binders. The composites based on thermosetting binders require a long polymerization process during their transformation into the product. In addition, the polymerized thermosetting binder is characterized by low deformability causing brittle destruction of the matrix of a composite material. When such composite is subjected to tensile loads across the fibers, micro cracks parallel to the fibers are formed in it. The formation of these microcracks results in a number of adverse effects, including a leakage failure, the emergence and accumulation of residual deformations under dynamic loading of composite structures. In addition, the fragility of the matrix leads to the delamination of the composite even with a slight impact, which causes an unpredictable decrease in the strength of the material during compression. These circumstances limit the level of permissible stresses in structures, which leads to a significant increase in their mass.

In order to eliminate these shortcomings, active efforts are currently being made to create thermoplastic prepregs, which have a number of advantages. The technological advantages include the unlimited viability of a prepreg during storage under normal conditions, the reduction of production time due to the absence of a long process of polymerization of the thermosetting matrix, the possibility of forming and processing the material in the heated state. The main structural advantages of composites with a thermoplastic matrix are associated with a high (up to about 100%) deformability of thermoplastics and a viscous nature of their destruction. As for the fracture toughness coefficient, which characterizes the resistance of a composite to delamination upon impact, the composites with a thermoplastic matrix exceed the composites with an epoxy matrix by more than 6 times, and as regards the compressive strength after impact - by more than 2 times (see [3] Handbook of Composites. Second Edition. Edited by S.T. Peters. London, Chapman and Hall, 1998).

However, the production of prepregs based on thermoplastic materials is connected with great technical difficulties, which are caused by the extremely high viscosity of the melt that does not allow for high-quality impregnation of tapes consisting of tens of thousands of elementary fibers with a diameter of about 5 µm. A relatively uniform distribution of high-molecular thermoplastics over the cross-section of the reinforcing tape requires a relatively high temperature and a long time, as well as high (measured in dozens of bar) pressure, which may result in a damage of fibers and a formation of the material with an uneven internal structure, which reduces the mechanical characteristics of the material (see [4] Lapointe, F. and Laberge Lebel, L. (2018), Fiber damage and impregnation during multi-die vacuum assisted pultrusion of carbon/PEEK hybrid yarns. Polym. Compos.).

To summarize the above - there exist some composites with thermosetting matrix, their disadvantages include long curing cycle, short storage time and special storage conditions of starting materials (prepregs), low deformation of the matrix, and, respectively, their low impact resistance. On the other hand - there are some composites with thermoplastic matrix, which solve almost all the above problems (no curing is required, no special conditions for long shelf life of materials, and high impact resistance), but which have a significant disadvantage - the melt of thermoplastics is very viscous and cannot penetrate into the bundle of thin fibers without high pressures. This makes the technology of manufacturing of composite parts with thermoplastics costly and complicated. Therefore, parts with a thermoplastic matrix are currently rarely used despite all the advantages.

In order to avoid the difficulties associated with the impregnation of a bunch of fibers with thermoplastics and thus to take the advantages providing by the thermoplastic matrix, a two-matrix material can be used in which the fiber bundles are impregnated with a low viscosity thermosetting binder and interconnected by a thermosetting binder containing thermoplastics (see [5] WO Application No. WO2011027160A1, IPC C08J5/24, B32B5/28, publ. 10.03.2011). This patent describes the cured prepreg comprising a layer of fibers and the first outer layer of thermosetting resin; and in this case, the resin layer includes thermoplastic particles and glass-carbon particles. The present invention relates to a cured prepreg, and the description of the essence of the invention states that "After manufacturing, the block of prepregs is cured under the action of elevated temperature and not necessarily increased pressure to obtain a cured multilayer material". The "block of prepregs" described in that patent is a finished product. Thus, this prepreg retains the main drawback of other known prepregs based on thermosetting matrix: a long curing process is required during its processing into the product. In addition, the introduction of thermoplastic particles into the matrix increases the resistance of the material to shock loads to a small extent as compared to composites based on a thermoplastic matrix.

The main and general drawback to all known prepregs with regard to our problem is that, in spite of the fact that the prepregs made on the thermosetting binder are widely known, none of them contains a fully cured thermosetting matrix and therefore all of them require curing when processed into a product.

### DISCLOSURE OF THE INVENTION

The problem solved by the claimed invention is the manufacture of products from composite materials of high weight efficiency. To do this, it is necessary to achieve the high characteristics of the deformability of the matrix of a composite material concurrently with the high physical and mechanical characteristics of this material along the fibers.

The technical result of the proposed invention is to reduce the complexity of the manufacture of parts with a thermoplastic matrix, which leads to a significant reduction in the cost of the manufacture of parts with a thermoplastic matrix (many times lower), to reduce the duration of manufacture of the product due to the lack of need for long-term polymerization of the binder, to increase the shelf life of starting materials (prepreg) and to increase the efficiency of the manufacture of products from composite materials.

The technical result is achieved due to the reinforcing composite filament having a cross section in the shape of a circle 0.1-0.7 mm in diameter or an ellipse with ellipticity from 1 to 2 and the largest diameter of 0.1-0.7 mm; and this filament contains a roving of reinforcing fibers impregnated with a thermosetting binder, which is subjected to heat of other treatment right up to a complete curing of the thermosetting binder. The roving additionally contains functional fibers made in the form of optical and/or conductive fibers. The reinforcing fibers are made in the form of carbon and/or glass and/or aramid and/or basalt and/or boron and/or metal fibers. Thermosetting binders are produced in the form of polyester, phenol-formaldehyde, urethane, epoxy, silicone, polyimide or bismaleimide resins.

The said technical result can be also achieved owing to the prepreg containing a reinforcing composite filament coated with a thermoplastic binder, and in this case the reinforcing composite filament has a cross section in the form of a circle 0.1-0.7 mm in diameter or an ellipse with an ellipticity of 1 to 2 and the largest diameter of 0.1-0.7 mm; and this filament is made of a roving of reinforcing fibers impregnated with a thermosetting binder; and this impregnated roving is subjected to heat or other treatment right up to a complete curing of the thermosetting binder, and in this case the thermoplastic binder is applied to the cured thermosetting binder. The roving additionally contains functional fibers made in the form of optical and/or conductive fibers. Reinforcing fibers are made in the form of carbon and/or glass and/or aramid and/or basalt and/or boron and/or metal fibers. Thermosetting binders are produced in the form of polyester, phenol-formaldehyde, urethane, epoxy, silicone, polyimide or bismaleimide resins. The thermoplastic binder can be polyethylene, polyamide, polycarbonate, polyamide, polyetheretherketone, polyacetal, polyphenylene sulfide, polysulfone, polyetherimide, polypropylene, polyformaldehyde, polyamide, polystyrene, polyethylene terephthalate or their copolymers.

The tape containing reinforcing composite filaments or prepregs described above can be also made, and in this case the filaments or prepregs are interconnected by bridges made of thermoplastic material.

The technical result is achieved in the composite reinforcement filament spinning machine containing a bobbin holder, which is fitted with at least one bobbin with a roving of reinforcing fibers or reinforcing and functional fibers, an impregnator that impregnates the roving with a thermosetting binder, two heat treatment chambers for a complete curing of the thermosetting binder (the temperature is 70-130°C in the first chamber, and 160-400°C in the second chamber), a finished filament receiver fitted with at least one receiving bobbin driven by a drive that ensures the pulling of the roving through all the elements of the machine.

Also, the technical result is achieved in the prepreg forming machine containing a bobbin holder, which is fitted with at least one bobbin with a roving of reinforcing fibers or reinforcing and functional fibers, an impregnator that impregnates the roving with a thermosetting binder, two heat treatment chambers for a complete curing of the thermosetting binder (the temperature is 70-130°C in the first chamber, and 160-400°C in the second chamber), an applicator for applying a thermoplastic coating on the fully cured roving impregnated with a thermosetting binder, and a finished prepreg receiver fitted with at least one receiving bobbin driven by a drive that ensures the pulling of the roving through all the elements of the machine.

And also, the technical result is achieved in the tape forming machine containing a bobbin holder, which is fitted with at least one bobbin with a roving of reinforcing fibers or reinforcing and functional fibers, an impregnator that impregnates the roving with a thermosetting binder, two heat treatment chambers for a complete curing of the thermosetting binder (the temperature is 70-130°C in the first chamber, and 160-400°C in the second chamber), an applicator for applying a thermoplastic coating on the fully cured roving impregnated with a thermosetting binder, a forming unit for forming a tape from cured rovings and binding them with thermoplastic bridges, and a finished tape receiver fitted with at least one receiving bobbin driven by a drive that ensures the pulling of the roving through all the elements of the machine.

### BRIEF DESCRIPTION OF DRAWINGS

Fig. 1 - The cross section of reinforcing composite filament:
Fig. 2 - The micrograph of reinforcing composite filament
Fig. 3 - The cross section of the prepreg containing the reinforcing composite filament
Fig. 4 - The cross section of the prepreg tape

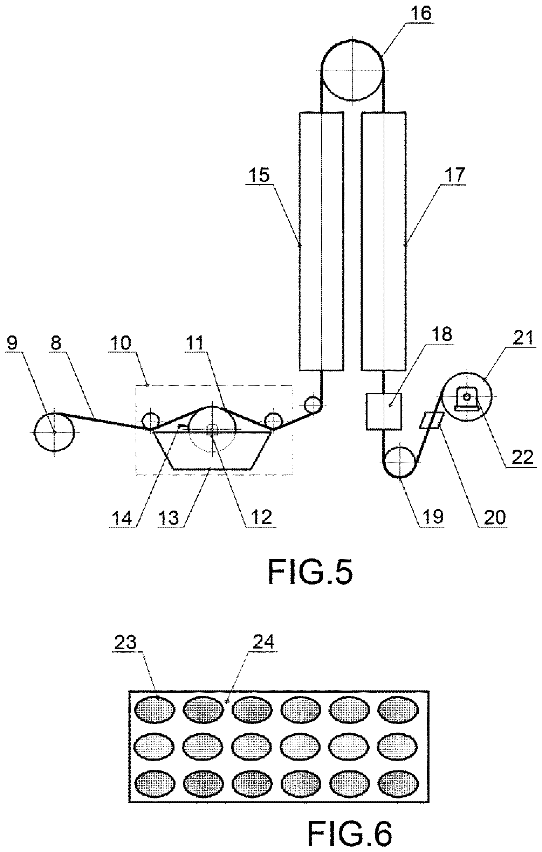

Fig. 5 - The schematic of machine for the manufacture of filament and / or prepreg
Fig. 6 - The cross section of the composite material produced from the prepreg

The following positions on the figures are indicated by numbers:
1 - *matrix material of composite roving; 2* - *reinforcing fiber; 3* - *functional fiber (optical, conductive); 4* - *composite filament; 5* - *prepreg coating; 6* - *composite filament;* 7 - *thermoplastic polymer; 8* - *roving of reinforcing fibers; 9* - *bobbin holder; 10* - *impregnator; 11* - *impregnating roller; 12* - *impregnating roller drive; 13* - *bath with binder; 14* - *scraper; 15 - heat treatment chamber No. 1; 16* - *reversal unit; 17- heat treatment chamber No. 2; 18* - *thermoplastic coating applicator; 19 - receiving drum;* 20 *- handler guide; 21* - *finished prepreg receiver; 22* - *finished prepreg receiver drive; 23* - *composite filament; 24* - *thermoplastic matrix.*

### DETAILED DESCRIPTION OF THE EMBODIMENTS

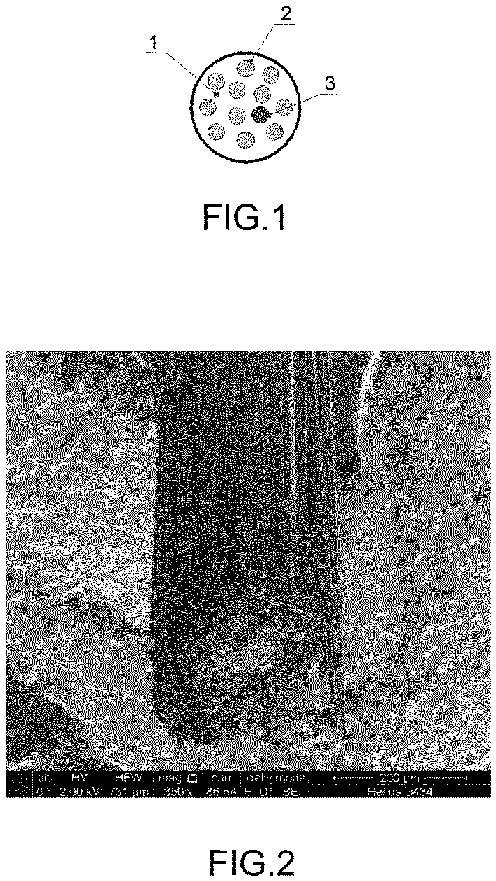

The reinforcing composite filament (Fig. 1) is a fiber roving which is impregnated with matrix material 1 and cured. The roving can contain reinforcing fibers 2, such as carbon, glass, aramid, basalt, boron, metal fibers, or other and functional fibers 3, such as optical and conductive fibers, such as copper. The bundle may include a different number of fibers, for example, 2, 100, 1000, 3000, 6000 and so on. Matrix material 1 used for impregnation is a thermosetting binder based on phenol-formaldehyde, polyester, epoxy and urea, silicone, polyimide, bismaleimide and other binding materials, or a mixture of a thermosetting binder with a thermoplastic binder. Thermosets possess good processing properties, in particular, low viscosity and good adhesion to any currently used types of reinforcing fibers that allow for a good impregnation of the reinforcing fiber bundle with the matrix in the absence of pores and voids and, therefore, a joint action of the fiber and the matrix. For the production of a reinforcing composite filament, the roving is impregnated with a binder so that the volume fraction of the binder is 20-40%. For example, the volume fractions of fibers and matrix material can have a ratio of 60%: 40%, 70%: 30%, 80%: 20%, or otherwise. The roving is then subjected to heat or other kind of treatment until the matrix material is completely cured. The temperature regime and the duration of curing depend on a particular type and grade of the matrix material. The cross section of the filament has the form of a circle 0.1-0.7 mm in diameter of or an ellipse with an ellipticity of 1 to 2 and a largest diameter of 0.1-0.7 mm. These filament sizes are associated with the following. When the filament size is less than 0.1 mm, the filament has a relatively low tensile strength, which complicates significantly its production by pulling through the units of the equipment for its production, which leads to an increase in the number of breakages, i.e. rejects and an increase in the cost of manufacturing the fiber, which negates its advantages. When the filament size is more than 0.7 mm and the shape of the cross section differs significantly from the circle, the filament in a fully cured state has a significant flexural rigidity which prevents its placing on curved surfaces to form parts of complex shape and, consequently, the achievement of the technical result is impossible. A micrograph of the finished composite filament is shown in Fig. 2.

The coated filament - prepreg (Fig. 2) - is above-described composite filament 4 (Fig. 1), which is covered after curing by thermoplastic material 5, such as acrylonitrile butadiene styrene (ABS), polylactide (PLA), polyamide (PA), polyetherimide (PEI), polyacetal, polyetheretherketone (PEEK), polycarbonate (PC), polysulfone (PS), polyphenylene sulphide (PPS), polyethylene terephthalate (PET), or other thermoplastic. Coating 5 serves to ensure a minimum volume fraction of the thermoplastic in the manufacturing process of the part and can be 20-60% of the total prepreg volume, for example, 20% or 30%.

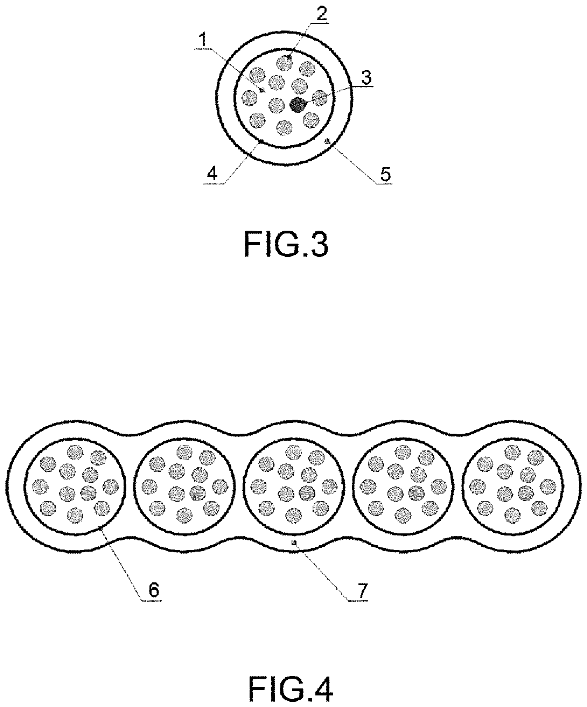

The tape made from a filament or a prepreg (Fig. 3) is a tape consisting of rows of composite filaments or rovings 6, connected to each other by thermoplastic 7, such as acrylonitrile butadiene styrene (ABS), polylactide (PLA), polyamide (PA), polyetherimide (PEI), polyacetal, polyetheretherketone (PEEK), polycarbonate (PC), polysulfone (PS), polyphenylene sulphide (PPS), polyethylene terephthalate (PET), or other thermoplastic. The volume fraction of thermoplastic 7 can be 20-60% of the total prepreg volume, for example, 20% or 30%.

The manufacture of a filament or a prepreg is performed by using the machine, the schematic of which is shown in Fig. 4. The machine consists of the following major components: bobbin holder 9, impregnation unit 10, one or more heat treatment chambers (15, 17), handler 20, finished prepreg receiving unit 21 with one or several receiving bobbins and drive 22.

One or more bobbins with initial roving 8 are installed in the bobbin holder. To ensure the roving tensioning when releasing from the bobbins, the bobbin holder may be equipped with tensioners using an axial spring braking, electromagnetic brakes or electric motors. The number of bobbins with the initial roving depends on the number of simultaneously impregnated rovings in the case of the manufacture of a prepreg roving or on the width of the tape in the case of the manufacture of a prepreg tape.

After leaving the bobbin holder, roving 8 enters impregnator 10. The Impregnator may be of a different design. In particular, it can be a system consisting of impregnating roller 11 driven by motor 12; the lower edge of the roller is immersed in binder bath 13. The binder bath is removable and has a temperature controlled and regulated heating unit. Scraper 14 is provided for removing excess binder from impregnating roller 14. The amount of binder on the roller is controlled by the clearance between the scraper and the roller. Dry roving 8 passing along the upper surface of impregnating roller 11 is soaked with a binder. The design of the impregnating device may differ from the described machine, depending on the kind of thermosetting binder is used for impregnation.

After impregnation, the roving enters the heat treatment chambers (15,17). The chambers can be divided into zones with different temperatures to provide full curing of a thermosetting binder. The vertical arrangement of the chambers is preferred to ensure uniform distribution of the binder inside the roving. Heating can be carried out by heaters located inside the chamber or by supplying heated air to the chamber. The moving speed of the roving within the chambers and, accordingly, the residence time in them, as well as the temperature in the chambers depend on the types of a fiber and a thermosetting binder. In particular, as regards the Toray T300 3K carbon fiber and an epoxy binder, the complete curing will require the 90°C temperature in first chamber 15, 160-200°C in second chamber 17, the total residence time of 5-10 minute for the roving in the chambers. In the case when several vertical chambers are used, the roving reversal is provided by means of reversal unit 16. Depending on the composition of a thermosetting binder, the temperature is 70-130°C in the first chamber, and 160-400°C in the second chamber.

The thermosetting binder passes three stages during the manufacturing process of reinforcing composite filament:
- Stage A - the initial polymerization products are mixed and ready to react when heated. The reaction is also going without heating, but very slowly. The mixture can be dissolved in solvents that slow down the interaction of initial products. It is in this state that binders are stored. At this stage, the roving is impregnated with a binder.
- Stage B - the solvents have been removed from the initial mixture, the products have entered into a polymerization reaction, but it is only in the initial stage. At this stage, the components of a binder are able to dissolve, melt, and be formed. Without a solvent, they are dry products, do not stick together and can be stored and transported for a long time under appropriate conditions. It is at this stage that the production of previously known prepregs is completed. The prepregs of this stage are traditionally used as a component in the production of composite parts. To complete the polymerization of binders, they must be heated to a certain temperature called the gelation temperature.
- Stage C - the polymerization reactions are completed, and the binder is no longer able to melt and dissolve in solvents; at normal temperatures it is a solid monolithic glassy substance that is incapable to change its shape. At this stage, the resin is contained in the composition of the finished reinforcing composite filament.

If the machine is intended for the production of a coated prepreg roving, the machine should be equipped with thermoplastic coating applicator 18. The embodiment is a heated and thermostable chamber containing a thermoplastic polymer melt within a maintained range of temperatures from 50° to 400°C. The lower output part of the cylinder is fitted with a sizing spinneret which determines the amount of thermoplastics applied to the surface of the fiber. The supply of thermoplastics to the chamber is carried out by means of rollers if the thermoplastics is in the form of a filament, or a screw if the thermoplastics is in the form of powder or granules.

If the machine is intended for the production of a prepreg tape, thermoplastic coating applicator 18 should also form a tape from rovings, for example, by using a rectangular spinneret.

The finished prepreg is cooled down, passes around receiving drum 19 and enters finished prepreg receiving unit 21, where the prepreg is wound on the receiving bobbin. The number of receiving bobbins corresponds to the number of simultaneously manufactured rovings/tapes. The receiving bobbins are fixed to the shaft driven by traction motor 22 at a controlled speed. Laying the prepreg in a working volume of bobbins is carried out with the help of handler guide 20 operating synchronously with the drive shaft.

When manufacturing the part (Fig.4), the prepreg is heated to a temperature higher than the processing temperature of thermoplastic matrix 24 and the glass transition temperature of the thermosetting matrix of composite rovings 23 and laid out on the mandrel forming the part. After laying out, the thermoplastic melt solidifies in the course of cooling, and the composite rovings being cooled become again rigid and form a layer of reinforced material with high mechanical characteristics. It is essential that the matrix material of the composite fiber is not melted but only softened, and the reinforcing bundle fibers located inside the bundle retain their location, which makes the arrangement of fibers more regular, improving the physical and mechanical characteristics of the material.

The described reinforcing composite filament and prepregs can be used to manufacture composite parts with a thermoplastic matrix. If in the production of a composite material with a thermoplastic matrix the traditional bundles are replaced with the described reinforcing composite filament, which is pre-impregnated with a thermosetting binder and completely cured, then, because the filament has a large diameter, this filament is easily and completely wetted with thermoplastic and allows for obtaining a composite part with a thermoplastic matrix without the use of significant pressures and complicated technological equipment. The invention is especially useful for implementation in additive processes of the manufacture of parts from composite materials, such as 3D-printing. The part is formed in such process by microextruders in which the plastic is under low pressure and unable to impregnate a reinforcing fiber roving. Replacing the traditional roving with a reinforcing composite filament, in which the roving is impregnated with a binder and completely cured, allows for the manufacture of parts containing a minimum number of pores and voids and providing high physical and mechanical characteristics.

Due to the use of the filament based on a cured binder, the complexity of the manufacture of parts with a thermoplastic matrix is reduced, which leads to a significant reduction in the cost (many times over) of the manufacture of parts with a thermoplastic matrix, because of the fact that various presses are not required and energy costs are reduced, etc. At the same time, the manufactured parts have all the advantages of parts containing a thermoplastic matrix - their curing is not required, they are highly resistant to impact, and the raw materials have unlimited viability under normal conditions.

## Claims

1. A reinforcing composite filament which contains a roving of reinforcing fibers impregnated with a thermosetting binder and has a cross section in the shape of a circle 0.1-0.7 mm in diameter or an ellipse with ellipticity from 1 to 2 and the largest diameter of 0.1-0.7 mm; and the impregnated roving is subjected to heat or other treatment right up to a complete curing of the thermosetting binder.

2. The filament according to claim 1 wherein the roving additionally contains functional fibers made in the form of optical and/or conductive fibers.

3. The filament according to claim 1 wherein the reinforcing fibers are made in the form of carbon and/or glass and/or aramid and/or basalt and/or boron and/or metal fibers.

4. The filament according to claim 1 wherein the thermosetting binder is produced in the form of polyester, phenol-formaldehyde, urethane, epoxy, silicone, polyimide or bismaleimide resins.

5. A prepreg containing a reinforcing composite filament coated with a thermoplastic binder, and in this case the reinforcing composite filament has a cross section in the form of a circle 0.1-0.7 mm in diameter or an ellipse with an ellipticity of 1 to 2 and the largest diameter of 0.1-0.7 mm; and this filament is made of a roving of reinforcing fibers impregnated with a thermosetting binder; and this impregnated roving is subjected to heat or other treatment right up to a complete curing of the thermosetting binder, and the thermoplastic binder is applied to the cured thermosetting binder.

6. The prepreg according to claim 5 wherein the roving additionally contains functional fibers made in the form of optical and / or conductive fibers.

7. The prepreg according to claim 5 wherein the reinforcing fibers are made in the form of carbon and/or glass and/or aramid and/or basalt and/or boron and/or metal fibers.

8. The prepreg according to claim 5 wherein the thermosetting binder is produced in the form of polyester, phenol-formaldehyde, urethane, epoxy, silicone, polyimide or bismaleimide resins.

9. The prepreg according to claim 5 wherein the thermoplastic binder can be polyethylene, polyamide, polycarbonate, polyamide, polyetheretherketone, polyacetal, polyphenylene sulfide, polysulfone, polyetherimide, polypropylene, polyformaldehyde, polyamide, polystyrene, polyethylene terephthalate or their copolymers.

10. The tape containing reinforcing composite filaments produced according to claim 1 or containing prepregs produced according to claim 5 wherein the filaments or prepregs are interconnected by bridges made of thermoplastic material.

11. A composite reinforcement filament spinning machine containing a bobbin holder, which is fitted with at least one bobbin with a roving of reinforcing fibers or reinforcing and functional fibers, an impregnator that impregnates the roving with a thermosetting binder, two heat treatment chambers for a complete curing of the thermosetting binder (the temperature is 70-130°C in the first chamber, and 160-400°C in the second chamber), a finished filament receiver fitted with at least one receiving bobbin driven by a drive that ensures the pulling of the roving through all the elements of the machine.

12. A prepreg forming machine containing a bobbin holder, which is fitted with at least one bobbin with a roving of reinforcing fibers or reinforcing and functional fibers, an impregnator that impregnates the roving with a thermosetting binder, two heat treatment chambers for a complete curing of the thermosetting binder (the temperature is 70-130°C in the first chamber, and 160-400°C in the second chamber), an applicator for applying a thermoplastic coating on the fully cured roving impregnated with a thermosetting binder, and a finished prepreg receiver fitted with at least one receiving bobbin driven by a drive that ensures the pulling of the roving through all the elements of the machine.

13. A tape forming machine containing a bobbin holder, which is fitted with at least one bobbin with a roving of reinforcing fibers or reinforcing and functional fibers, an impregnator that impregnates the roving with a thermosetting binder, two heat treatment chambers for a complete curing of the thermosetting binder (the temperature is 70-130°C in the first chamber, and 160-400°C in the second chamber), an applicator for applying a thermoplastic coating on the fully cured roving impregnated with a thermosetting binder, a forming unit for forming a tape from cured rovings and binding them with thermoplastic bridges, and a finished tape receiver fitted with at least one receiving bobbin driven by a drive that ensures the pulling of the roving through all the elements of the machine.
